# EUROPÄISCHE PATENTSCHRIFT

(11) **EP 3 041 064 B1**
(45) Veröffentlichungstag und Bekanntmachung des Hinweises auf die Patenterteilung: **23.08.2017**
(21) Anmeldenummer: 15003433.8
(22) Anmeldetag: 02.12.2015
(51) Int. Cl.: H01M 2/10, H01M 10/42

(54) **AKKUPACK MIT EINER KONTAKTPLATINE ZUM ANSCHLUSS AN EINEN VERBRAUCHER**
BATTERY PACK WITH A CONTACT BOARD FOR CONNECTION TO A CONSUMER
BATTERIE COMPRENANT UNE LAME DE CONTACT DESTINEE AU RACCORDEMENT A UN CONSOMMATEUR

(30) Priorität: 12.12.2014 DE 102014018474
(43) Veröffentlichungstag der Anmeldung: 06.07.2016
(73) Patentinhaber: Andreas Stihl AG & Co. KG, 71336 Waiblingen (DE)
(72) Erfinder: Gaul, Henrik, D-71404 Korb (DE); Liebhard, Gernot, D-71332 Waiblingen (DE); Wagner, Daniel, D-73650 Winterbach (DE); Schurr, Martin, D-73557 Mutlangen (DE)
(74) Vertreter: Wasmuth, Rolf

(56) Entgegenhaltungen:
- EP-A1- 2 328 200
- US-A1- 2010 156 350

## Beschreibung

Die Erfindung betrifft einen Akkupack aus zumindest einer in einem Zellhalter gehaltenen Einzelzelle nach dem Oberbegriff des Anspruchs 1.

Bekannte Akkupacks bestehen meist aus einer Anordnung von mehreren Einzelzellen, die über Zellverbinder auf je einer Kontaktseite elektrisch zu einem Zellverbund miteinander verbunden sind. Über eine Kontaktplatine, die mehrere Steckanschlüsse trägt, werden die Einzelzellen des Akkupacks mit einem elektrischen Verbraucher verbunden. Die Kontaktplatine kann auf einer Seitenfläche des Zellhalters liegen.

Derartige Akkupacks werden z. B. in Halter von elektrischen Arbeitsgeräten eingeschoben, in denen in Einschieberichtung ausgerichtete Anschlusskontakte vorgesehen sind, die in die Steckanschlüsse der Kontaktplatine eingreifen. Bei der Kontaktierung ist erforderlich, dass die Steckanschlüsse mit den Anschlusskontakten fluchten, um eine sichere, elektrisch belastbare Kontaktierung herzustellen.

Liegen die Anschlusskontakte und die Steckanschlüsse nicht passend zueinander, kann eine schlechte Kontaktierung gegeben sein. Treten durch das Arbeitsgerät verursachte Vibrationen hinzu, können die Anschlusskontakte von den Steckanschlüssen abheben, was unter elektrischer Belastung zu einem erhöhten Kontaktverschleiß führen kann. Eine hohe Stromentnahme aus dem Akkupack kann ferner zu einer Temperaturerhöhung der Einzelzellen und der elektrischen Verbindungen führen, wodurch eine Lageveränderung der Kontaktplatine auftreten kann.

Der Erfindung liegt die Aufgabe zugrunde, einen Akkupack aus zumindest einer Einzelzelle mit einer Kontaktplatine derart auszubilden, dass auch im Betrieb des Akkupacks eine dauerhafte, elektrisch hoch belastbare Verbindung zwischen Anschlusskontakten eines Akkuhalters und den Steckanschlüssen auf der Kontaktplatine erzielt ist.

Die Aufgabe wird erfindungsgemäß nach den Merkmalen des Anspruchs 1 gelöst.

Auf einer Seitenfläche des Zellhalters ist eine Halterung für die Kontaktplatine vorgesehen, wobei die Kontaktplatine in der Halterung in einer Verschieberichtung verschiebbar gelagert ist. Die elektrische Verbindung zwischen der Einzelzelle oder einem Zellverbund und der Kontaktplatine wird durch zumindest ein elastisches Kontaktband ausgebildet, welches in Verschieberichtung der Kontaktplatine federnd nachgiebig ausgebildet ist. Die Kontaktplatine wird durch das elastische Kontaktband gehalten, wobei die Kontaktplatine relativ zur Längsachse der Kontaktbänder verschiebbar bleibt. Dadurch wird gewährleistet, dass sich die Kontaktplatine mit ihren Steckanschlüssen nach den Anschlusskontakten in einem Akkuhalter eines Arbeitsgerätes ausrichtet und eine mechanisch sichere Verbindung hergestellt ist, die auch unter hoher elektrischer Belastung eine sichere Stromführung gewährleistet. Auch ein unter elektrischer Belastung sich erwärmendes Kontaktband und ggf. auftretende Längenänderungen können durch das Kontaktband selbst ausgeglichen werden. Das elastische Kontaktband selbst dient dabei als nachgiebiges Anschlusselement, so dass die Kontaktplatine verschiebbar bleibt.

Die Verschiebbarkeit der Kontaktplatine stellt insbesondere sicher, dass bei einer Kontaktierung mit entsprechenden Anschlusskontakten z. B. in einem Akkuschacht die Kontaktplatine sich - unter federnder Wirkung der elastischen Kontaktbänder - nach den Anschlusselementen des Akkuschachtes ausrichten kann, so dass eine einfache, elektrisch belastbare Kontaktierung gewährleistet ist.

Das Kontaktband weist eine Längsachse auf, wobei die Erstreckung des Kontaktbandes in Richtung seiner Längsachse mehrfach größer ist als eine senkrecht zur Längsachse gemessene Breite. Durch diese geometrische Form ist eine federnde Wirkung des Kontaktbandes begünstigt.

Zweckmäßig liegt das Kontaktband mit seiner Längsachse in einem Anschlussabschnitt des Kontaktbandes parallel zur Verschieberichtung der Kontaktplatine ausgerichtet. Der Anschlussabschnitt, welcher in Verschieberichtung der Kontaktplatine ausgerichtet liegt, erstreckt sich vorteilhaft entlang einer ersten Seitenfläche des Zellhalters. Dabei wird der Anschlussabschnitt mit einem Kontaktende auf der Kontaktplatine mechanisch festgelegt und dabei elektrisch kontaktiert.

In Weiterbildung der Erfindung liegt das Kontaktband mit seiner Längsachse in einem seitlichen Bandabschnitt des Kontaktbandes senkrecht zur Verschieberichtung der Kontaktplatine ausgerichtet. Dabei kann der seitliche Bandabschnitt parallel zu einer zweiten Seitenfläche des Zellhalters ausgerichtet liegen.

Vorteilhaft schließen der Anschlussabschnitt und der seitliche Bandabschnitt aneinander an. Der Anschlussabschnitt liegt zweckmäßig auf einer ersten Seitenfläche des Zellhalters, während der seitliche Bandabschnitt auf einer anderen, zweiten Seitenfläche des Zellhalters vorgesehen ist. Die zweite Seitenfläche des Zellhalters schließt an die erste Seitenfläche des Zellhalters an, wobei die Stoßkante der ersten und der zweiten Seitenfläche eine Ecke des Akkupacks ausbilden.

Der seitliche Bandabschnitt liegt insbesondere winklig zum Anschlussabschnitt, wobei vorzugsweise ein rechter Winkel von etwa 90° gegeben ist. Dieser Winkel entspricht dem Winkel, mit dem die erste und die zweite Seitenfläche aneinander anschließen.

Der seitliche Bandabschnitt weist ein Kontaktende auf, das über eine Anschlussfahne mit einem Zellverbinder elektrisch verbunden ist. Vorteilhaft sind der Zellverbinder und das Kontaktband einteilig ausgebildet.

Die Kontaktplatine wird in Verschieberichtung an gegenüberliegenden Randbereichen mit je einem Kontaktband verbunden. Die Kontaktplatine liegt vorteilhaft zwischen den Kontaktenden der Kontaktbänder.

Die Steckanschlüsse der Kontaktplatine sind als starre Steckanschlüsse mit flächigen, federnden Kontaktzungen ausgebildet, die quer zur Verschieberichtung ausgerichtet liegen.

Ein eigener erfinderischer Gedanke, der auch eine Weiterbildung der vorstehend beschriebenen Erfindung sein kann, ist die Integration eines elektrischen Sicherungselementes in das Kontaktband. Nach diesem Gedanken ist vorgesehen, im Kontaktband selbst ein elektrisches Sicherungselement gegen elektrische Überlastung auszubilden. Dieses Sicherungselement ist insbesondere eine Schmelzsicherung, d. h., bei elektrischer Überlast durch einen zu hohen Strom schmilzt das Sicherungselement und trennt das Kontaktband auf. Dabei kann auf einer Seite einer Längsmittelachse des Kontaktbandes ein erstes elektrisches Sicherungselement und auf der anderen Seite der Längsmittelachse des Kontaktbandes ein zweites elektrisches Sicherungselement auszubilden. Zweckmäßig sind die Sicherungselemente auf beiden Seiten der Längsmittelachse elektrisch zueinander parallel geschaltet.

In einfacher Ausgestaltung dieses selbstständigen Gedankens eines Sicherungselements im Kontaktband ist im Kontaktband zwischen dem Kontaktende und der Anschlussfahne eine Ausnehmung vorgesehen. Diese Ausnehmung ist derart nahe an einem Längsrand des Kontaktbandes angeordnet, dass die Ausnehmung mit einem Längsrand des Kontaktbandes einen Materialsteg begrenzt, der die Materialschwächung des Kontaktbandes bildet und damit das Sicherungselement bildet. Ist auf beiden Seiten der Längsmittelachse im Kontaktband je eine Ausnehmung ausgebildet, kann es zweckmäßig sein, die Ausnehmungen durch einen Längsschlitz miteinander zu verbinden. In Seitenansicht auf das Kontaktband bilden die Ausnehmungen und der sie verbindende Längsschlitz etwa die Form des Buchstabens Z, wobei die eine Ausnehmung den Fuß des Buchstabens Z und die andere Ausnehmung das Dach des Buchstabens Z bildet. Diese körperliche Gestaltung erhält die mechanische Stabilität des Kontaktbandes, da die Materialschwächung des Kontaktbandes über dessen Länge verteilt wird.

Die Ausnehmung im Kontaktband begrenzt somit auf einer Seite einer Längsmittelachse des Kontaktbandes mit dem einen Längsrand den Materialsteg und auf der anderen Seite der Längsmittelachse mit dem anderen Längsrand einen Leitungsabschnitt des Kontaktbandes. Dabei ist die Gestaltung vorteilhaft so getroffen, dass der Materialsteg eine quer zu seiner Mittelachse des Kontaktbandes gemessene Breite aufweist und die in gleicher Richtung gemessene Breite des Leitungsabschnitts breiter ist als der Materialsteg selbst.

Weitere Merkmale der Erfindung ergeben sich aus den weiteren Ansprüchen, der Beschreibung und der Zeichnung, in der ein nachstehend im Einzelnen beschriebenes Ausführungsbeispiel der Erfindung dargestellt ist. Es zeigen:
- Fig. 1: eine Ansicht auf eine Seitenfläche eines Akkupacks mit einer Kontaktplatine,
- Fig. 2: eine Draufsicht auf eine erste, obere Stirnseite des Akkupacks gemäß Pfeilrichtung II in Fig. 1,

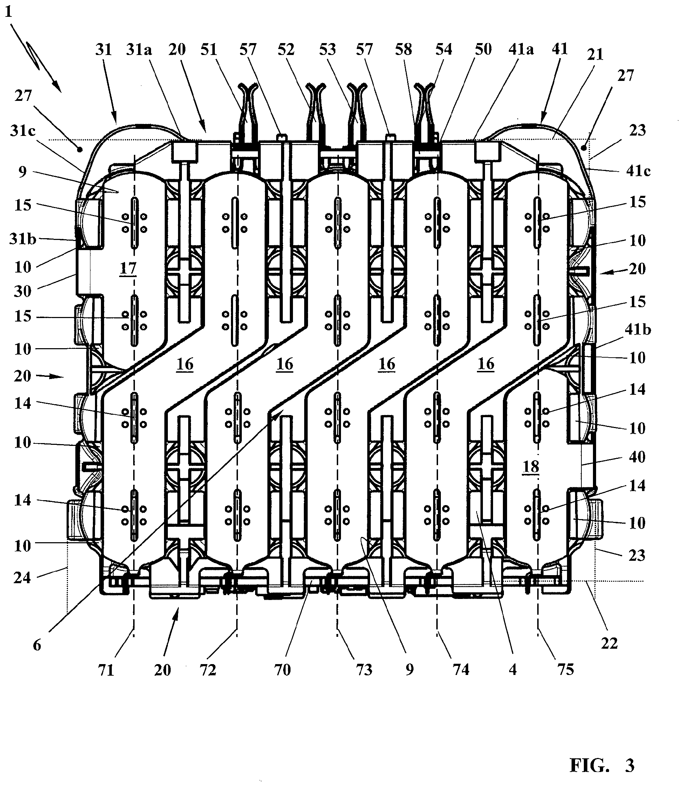

- Fig. 3: eine Draufsicht auf eine zweite, untere Stirnseite des Akkupacks gemäß Pfeilrichtung III in Fig. 1,
- Fig. 4: eine Ansicht auf eine weitere Seitenfläche des Akkupacks in Pfeilrichtung IV in Fig. 1,
- Fig. 5: eine Ansicht auf eine weitere Seitenfläche in Pfeilrichtung V in Fig. 1,
- Fig. 6: in vergrößerter Ansicht eine Halterung der Kontaktplatine mit integrierten Anschlägen zur Begrenzung eines Verschiebeweges gemäß Detail VI in Fig. 1,
- Fig. 7: eine Seitenansicht auf ein Kontaktband mit einem Sicherungselement gegen elektrische Überlast.

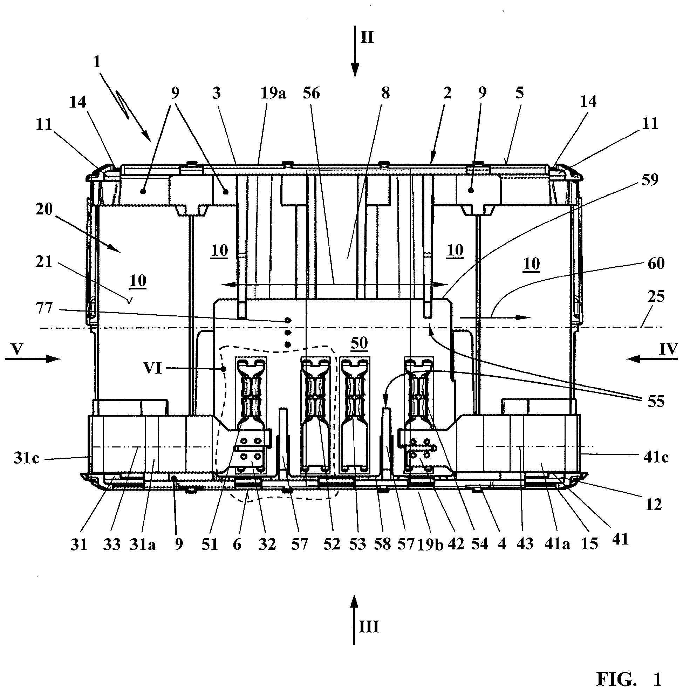

Der in Fig. 1 dargestellte Akkupack 1 besteht im Wesentlichen aus einem Zellhalter 2 und zumindest einer Einzelzelle 10, die eine zylindrische Grundform aufweist. Im Ausführungsbeispiel sind mehrere Einzelzellen 10 zu einem Akkupack 1 zusammengefasst. Jeweils ein Ende 11 einer Einzelzelle 10 bildet einen Pluspol 14; ein gegenüberliegendes, anderes Ende 12 der Einzelzelle 10 bildet einen Minuspol 15. Der Zellhalter 2 ist aus einer ersten, oberen Zellwanne 3 und einer zweiten, unteren Zellwanne 4 zusammengesetzt. Die erste, obere Zellwanne 3 bildet eine erste, obere Stirnseite 5 des Akkupacks 1. Die zweite, untere Zellwanne 4 bildet eine zweite, untere Stirnseite 6 des Akkupacks 1. In den Zellwannen 3, 4 sind die Enden 11 und 12 der Einzelzellen 10 in zugeordneten Aufnahmen 9 gehalten. Die einen Enden 11 der Einzelzellen 10 liegen auf einer gemeinsamen ersten Kontaktseite 19a des Zellhalters 2. Die anderen Enden 12 dieser Einzelzellen 10 liegen auf einer gemeinsamen zweiten Kontaktseite 19b des Zellhalters 2. Die erste Kontaktseite 19a bildet dabei die erste, obere Stirnseite 5; die zweite Kontaktseite 19b bildet dabei die zweite, untere Stirnseite 6. Die Seitenfläche des Akkupacks 1, auf der eine Kontaktplatine 50 angeordnet ist, verbindet vorteilhaft die Kontaktseiten 19a, 19b miteinander. Die Kontaktplatine 50 liegt somit auf einer Umfangsseite des Akkupacks 1.

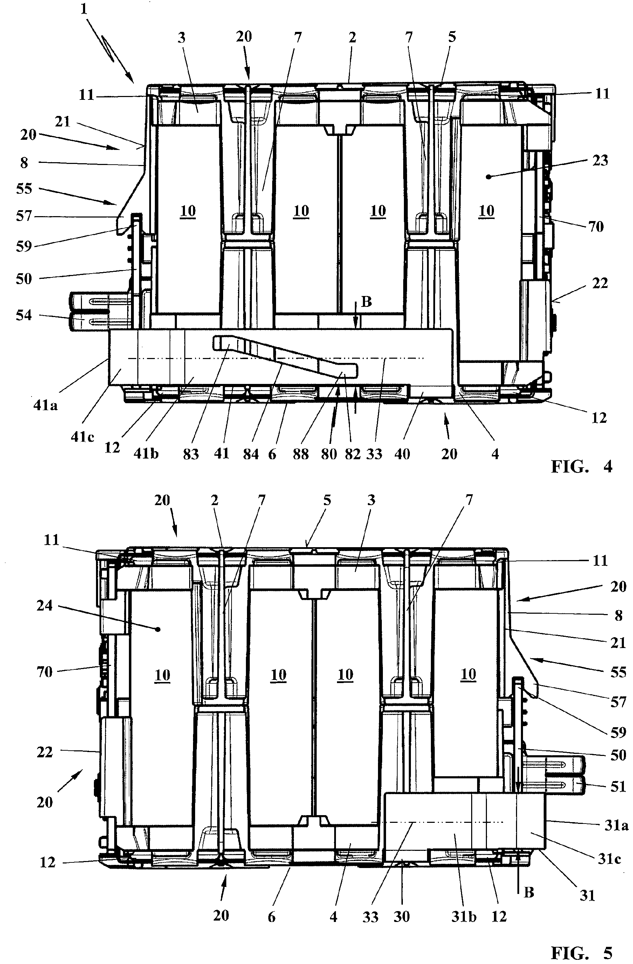

Im gezeigten Ausführungsbeispiel sind zwanzig Einzelzellen 10 zwischen den Zellwannen 3 und 4 des Zellhalters 2 gehalten, wobei jede Einzelzelle 10 mit ihren Enden 11, 12 in einer entsprechenden Aufnahme 9 der Zellwannen 3, 4 lagefixiert ist. Die beiden Zellwannen 3, 4 sind über Verbindungsstege 7, 8 miteinander verbunden. Zur Verbindung der Zellwannen 3, 4 sind Verbindungsstege 8 auf den Längsseiten 21, 22 (Figuren 4, 5) der Seitenflächen 20 angeordnet. Entsprechend sind auf den Schmalseiten 23, 24 (Figuren 4, 5) der Seitenflächen 20 Verbindungsstege 7 vorgesehen. Die Verbindungsstege 8 sind breiter ausgebildet als die Verbindungsstege 7. Die Verbindungsstege 7, 8 füllen den Raum zwischen benachbarten Einzelzellen 10 und stellen eine formschlüssige Verbindung zwischen den Zellwannen 3 und 4 her. Der Zellhalter 2 ist als Baueinheit mechanisch stabil ausgebildet.

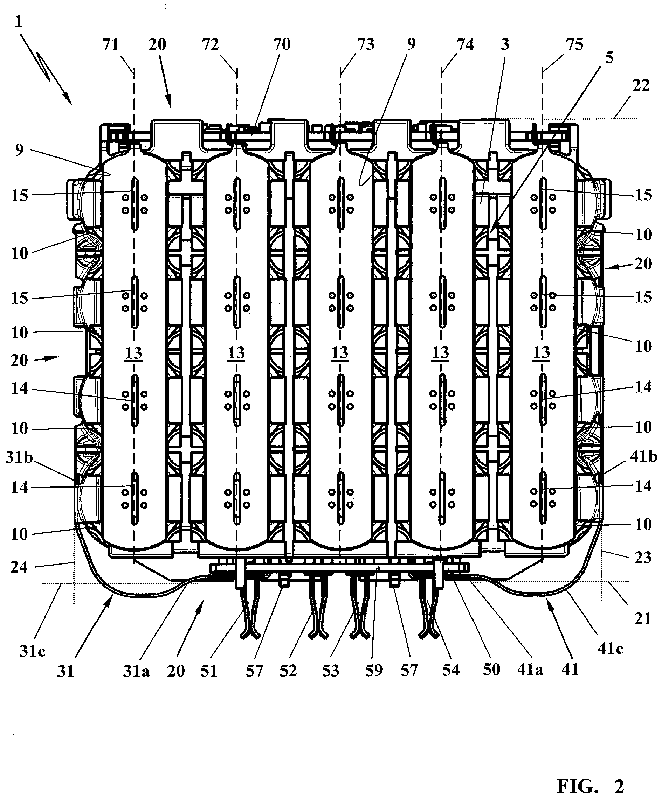

Die Einzelzellen 10 liegen in fünf parallelen Reihen 71, 72, 73, 74, 75 zu je vier Einzelzellen 10. Jede Einzelzelle 10 wird mit ihren Enden 11, 12 in zugeordneten Aufnahmen 9 der Zellwannen 3, 4 gehalten. Die Aufnahmen 9 sind nach außen offen, so dass die elektrischen Pole 14, 15 der Einzelzellen 10 auf der jeweiligen Kontaktseite 19a, 19b frei liegen. Wie aus der Draufsicht nach Fig. 2 ersichtlich, werden die Pole 14, 15 der Einzelzellen 10 auf der ersten Stirnseite 5 über Zellverbinder 13 elektrisch und mechanisch miteinander verbunden. Im Ausführungsbeispiel nach Fig. 2 werden jeweils zwei benachbarte Einzelzellen 10 mit ihren Pluspolen 14 elektrisch parallel liegend mit dem Zellverbinder 13 elektrisch und mechanisch verbunden und mit den Minuspolen 15 der in gleicher Reihe liegenden Einzelzellen 10 kontaktiert. Wie Fig. 2 zeigt, sind auf der ersten Stirnseite 5 des Akkupacks 1 fünf Zellverbinder 13 vorgesehen, wobei ein Zellverbinder 13 jeweils die Pluspole 14 zweier Einzelzellen 10 und die Minuspole 15 zweier Einzelzellen 10 einer Reihe 71, 72, 73, 74, 75 elektrisch miteinander kontaktiert.

Auf der gegenüberliegenden zweiten Stirnseite 6 des Akkupacks 1 sind Zellverbinder 16 vorgesehen, die nebeneinander liegende Reihen 71, 72, 73, 74, 75 der Einzelzellen 10 miteinander verbinden. Die Pluspole 14 werden von zwei Einzelzellen 10 der einen Reihe 71 mit den Minuspolen 15 der benachbart liegenden Reihe 72 elektrisch und gleichzeitig mechanisch verbunden. Die Zellverbinder 16 haben etwa Z-förmige Gestalt. Auf diese Weise werden die Reihen 71, 72, 73, 74 und 75 elektrisch miteinander kontaktiert.

Die Minuspole 15 der ersten Reihe 71 werden mit einem Zellverbinder 17 kontaktiert, der eine Anschlussfahne 30 aufweist. Die Pluspole 14 der letzten Reihe 75 der Zellanordnung des Akkupacks 1 werden mit einem Zellverbinder 18 verbunden, der eine Anschlussfahne 40 aufweist. Die Anschlussfahnen 30, 40 sind um etwa 90° aus der Ebene der Kontaktseite 19a, 19b abgebogen, insbesondere rechtwinklig abgebogen. Vorteilhaft liegen die abgebogenen Anschlussfahnen 30, 40 in der Ebene einer Seitenfläche 20 des Zellhalters 2. Im Ausführungsbeispiel liegt die Anschlussfahne 30 des Zellverbinders 17 in der Ebene der Schmalseite 24. Die Anschlussfahne 40 des Zellverbinders 18 liegt in der Ebene der Schmalseite 23. Vorteilhaft können die Anschlussfahnen 30, 40 parallel zu den Schmalseiten 23, 24 liegen.

Jede der Anschlussfahnen 30, 40 ist elektrisch mit einem Kontaktband 31, 41 verbunden. Das Kontaktband 31, 41 weist eine Längsachse 33, 43 auf, wobei die Erstreckung des Kontaktbandes 31, 41 in Richtung seiner Längsachse 33, 43 mehrfach größer ist als eine senkrecht zur Längsachse 33, 43 gemessene Breite B (Figuren 4, 5).

Das Kontaktband 31, 41 erstreckt sich - zumindest mit einem seitlichen Bandabschnitt 31b, 41b - längs der Seitenflächen 20 des Akkupacks 1. Im Ausführungsbeispiel erstreckt sich das Kontaktband 31, 41 mit einem seitlichen Bandabschnitt 31b, 41b längs der Schmalseiten 23 und 24 des Akkupacks 1. Das Kontaktband 31, 41 kann geeignete Kontaktenden zur Verbindung mit den Anschlussfahnen 30, 40 aufweisen. Vorteilhaft ist ein Kontaktband 31, 41 einteilig mit der zugeordneten Anschlussfahne 30, 40 und/oder mit dem zugeordneten Zellverbinder 17, 18 ausgebildet.

Die Kontaktbänder 31, 41 sind zu der Kontaktplatine 50 geführt, die mehrere Steckanschlüsse 51, 52, 53, 54 zur elektrischen Kontaktierung des Akkupacks 1 mit einem nicht dargestellten elektrischen Verbraucher trägt. Die Steckanschlüsse 51, 52, 53, 54 der Kontaktplatine 50 sind als starre Steckanschlüsse mit flächigen, federnden Kontaktzungen ausgebildet. Die Kontaktzungen liegen quer zur Verschieberichtung 56 ausgerichtet. Die Lage der Kontaktzungen ist bevorzugt auch quer zur Längsachse 33 Kontaktbänder 31, 41 ausgerichtet.

Die Kontaktplatine 50 liegt auf einer Seitenfläche 20 des Akkupacks 1. Im Ausführungsbeispiel liegt die Kontaktplatine 50 auf einer Längsseite 21 des Akkupacks 1, wobei - wie die Figuren zeigen - die Kontaktplatine 50 parallel zur Seitenfläche 20 bzw. zur Längsseite 21 angeordnet ist. Die Seitenfläche 20 des Zellhalters 2, auf der die Kontaktplatine 50 des Akkupacks 1 liegt, verbindet die Stirnseiten 5, 6 des Akkupacks 1 miteinander, verbindet also die Kontaktseiten 19a, 19b des Akkupacks 1 miteinander. Es kann zweckmäßig sein, die Kontaktplatine 50 auf einer Schmalseite 23, 24 des Akkupacks 1 anzuordnen.

Die Kontaktplatine 50, die eine Anschlussseite des Akkupacks 1 bildet, ist in einer Halterung 55 verschieblich gelagert. Die Halterung 55 ist zweckmäßig am Zellhalter 2 ausgebildet und gewährleistet eine Beweglichkeit der Kontaktplatine 50 in zumindest einer Verschieberichtung 56. Die Verschieberichtung 56 erstreckt sich in der Ebene der Seitenfläche 20, insbesondere in der Richtung der Seitenfläche 20, im Ausführungsbeispiel in Richtung der Längsseite 21. Zweckmäßig erstreckt sich die Verschieberichtung 56 der Kontaktplatine 50 in Richtung einer Mittelachse der Seitenfläche 20. Im Ausführungsbeispiel erstreckt sich die Verschieberichtung 56 der Kontaktplatine in Richtung der Längsmittelachse 25 der Seitenfläche 20.

Zur verschiebbaren Halterung der Kontaktplatine 50 sind gegenüberliegende Platinenränder 58, 59 von der Halterung 55 übergriffen. Wie die Figuren 4 und 5 zeigen, ist die Halterung 55 durch klauenartige bzw. U-förmige Haken 57 ausgebildet, die die Platinenränder 58, 59 übergreifen.

Die Kontaktbänder 31, 41 der Anschlussfahnen 30 und 40 sind von den Schmalseiten 23 und 24 über eine Kante 27 des Akkupacks 1 auf die Anschlussseite geführt, also auf eine Seitenfläche 20 des Akkupacks 1. Diese Seitenfläche 20 ist im Ausführungsbeispiel eine Längsseite 21 des Akkupacks 1. Das Kontaktband 31 bzw. 41 ist mit seinem Kontaktende 32 bzw. 42 auf der Kontaktplatine 50 mechanisch festgelegt. Die mechanische Fixierung ist vorteilhaft so ausgelegt, dass auch eine elektrische Verbindung mit den Steckanschlüssen 51, 54 zur Leistungsverbindung mit dem elektrischen Verbraucher hergestellt ist. Die Steckanschlüsse 52, 53 dienen der elektrischen Kontaktierung mit einer Überwachungsplatine 70, die auf der gegenüberliegenden Längsseite 22 an dem Zellhalter 2 gehalten ist. Zur Kommunikation der Steckanschlüsse 52, 53 mit der Überwachungsplatine 70 ist eine Verbindungsleitung 77 vorgesehen.

Das Kontaktband 31, 41 ist im Ausführungsbeispiel durch drei Bandabschnitte gebildet, nämlich einen Anschlussabschnitt 31 a, 41 a, einen seitlichen Bandabschnitt 31 b, 41b und einen gebogenen Bandabschnitt 31c, 41c, der einen Anschlussabschnitt 31a, 41a mit einem seitlichen Bandabschnitt 31b, 41b verbindet. Es kann zweckmäßig sein, das Kontaktband 31, 41 nur mit einem seitlichen Bandabschnitt 31b, 41b auszubilden.

Das Kontaktband 31, 41 erstreckt sich in dem Anschlussabschnitt 31 a, 41a in Richtung seiner Längsachse 33, 43, wobei die Längsachse 33, 43 des Anschlussabschnittes 31a, 41a in Verschieberichtung 56 der Kontaktplatine 50 verläuft. Vorteilhaft ist die Kontaktplatine 50 in Verschieberichtung 56 an gegenüberliegenden Randbereichen mit je einem Kontaktende 32, 42 eines Kontaktbandes 31, 41 verbunden. Die Kontaktplatine 50 liegt vorteilhaft zwischen den Kontaktenden 32, 42 der Kontaktbänder 31, 41. Der Anschlussabschnitt 31a, 41a kann dabei etwa parallel zur Seitenfläche 20 bzw. zur Längsseite 21 und/oder zur Kontaktplatine 50 liegen. Zweckmäßig liegt das Kontaktband 31, 41 mit seiner Längsachse 33, 43 in dem Anschlussabschnitt 31a, 41a parallel zur Verschieberichtung 56 der Kontaktplatine 50 ausgerichtet.

Der seitliche Bandabschnitt 31b, 41b des Kontaktbandes 31, 41 verläuft insbesondere parallel zu den Seitenflächen 20. Im Ausführungsbeispiel verlaufen die seitlichen Bandabschnitt 31b, 41b des Kontaktbandes 31, 41 parallel zu den Schmalseiten 23, 24 des Akkupacks 1. Das Kontaktband 31, 41 liegt mit seiner Längsachse 33, 43 in dem seitlichen Bandabschnitt 31b, 41b senkrecht zur Verschieberichtung 56 der Kontaktplatine 50.

Wie die Figuren 4 und 5 zeigen, ist der seitliche Bandabschnitt 31b des Kontaktbandes 31 deutlich kürzer als der Bandabschnitt 41b des Kontaktbandes 41. Dies liegt darin begründet, dass die Anschlussfahne 30 des Zellverbinders 17 näher an der Anschlussseite des Akkupacks1 und damit näher an der Kontaktplatine 50 liegt als die Anschlussfahne 40 des Zellverbinders 18.

Der Anschlussabschnitt 31 a, 41 a und der seitliche Bandabschnitt 31 b, 41b schließen aneinander an, wobei der Anschlussabschnitt 31 a, 41 a auf einer erste Seitenfläche 20 des Zellhalters 2 und der seitliche Bandabschnitt 31b, 41b auf einer zweiten Seitenfläche 20 des Zellhalters 2 liegt. Dabei schließt die zweite Seitenfläche 20 an die erste Seitenfläche 20 des Akkupacks 1 an. Die Anschlussabschnitte 31a, 41a und die seitlichen Bandabschnitte 31b, 41b sind vorteilhaft über einen gebogenen Bandabschnitt 31c bzw. 41c miteinander verbunden, wobei der gebogene Bandabschnitt 31 c, 41c die Kante 27 des Akkupacks 1 umgreift. Der gebogene Bandabschnitt 31 c, 41c erstreckt sich über einen Bogenwinkel von etwa 90° und ist vorzugsweise als Ausgleichselement gestaltet, welches Lageveränderungen der Kontaktplatine 50 federnd ausgleichen kann. Der gebogene Bandabschnitt 31 c, 41c kann durch elastische Verformung eine Verschiebung der Kontaktplatine 50 in Verschieberichtung 56 ausgleichen. Alternativ oder zusätzlich ist auch ein Ausgleich einer Verschiebung der Kontaktplatine 50 in Verschieberichtung 56 durch den seitlichen Bandabschnitt 31b, 41b möglich. Ein Ausgleich wird dadurch erzielt, dass der seitliche Bandabschnitt 31b, 41b senkrecht zu seiner Ebene federnd ausgelenkt wird.

Die Kante 27 ist der Bereich, in dem die Seitenflächen 20, im Ausführungsbeispiel die Längsseite 21 und die Schmalseiten 23 bzw. 24, aneinander anschließen. Entsprechend der Gestaltung des Akkupacks 1 als quaderförmiger Akkupack 1 liegt der Anschlussabschnitt 31 a, 41 a zum seitlichen Bandabschnitt 31 b, 41 b in einem Winkel. Der Winkel beträgt bevorzugt etwa 90° und ist im Ausführungsbeispiel als rechter Winkel gestaltet. Der seitliche Bandabschnitt 31b, 41b ist dabei mit der Anschlussfahne 30 bzw. 40 des Zellverbinders 17 bzw. 18 verbunden. Vorteilhaft sind der Zellverbinder 17, 18, seine Anschlussfahne 30, 40 sowie das Kontaktband 31, 41 einteilig ausgebildet. Dabei ist die Gestaltung so getroffen, dass das Kontaktband 31, 41 elastisch ist, also bei einem Verschieben der Kontaktplatine 50 in Verschieberichtung 56 z. B. durch Verformung oder durch federnde Auslenkung nachgibt. Verschiebt sich die Kontaktplatine 50 z. B. in Pfeilrichtung 60, wird die Elastizität des bogenförmigen Bandabschnittes 41c und/oder des seitlichen Bandabschnittes 41b eine Bewegung der Kontaktplatine 50 zulassen. Aufgrund der Gestalt des bogenförmigen Bandabschnittes 31c und/oder der Auslenkung des seitlichen Bandabschnittes 41b ist ein Ausgleichsweg bereitgestellt, so dass die Kontaktplatine 50 in und entgegen Pfeilrichtung 60 ohne Behinderung durch die Kontaktbänder 31, 41 ausweichen kann.

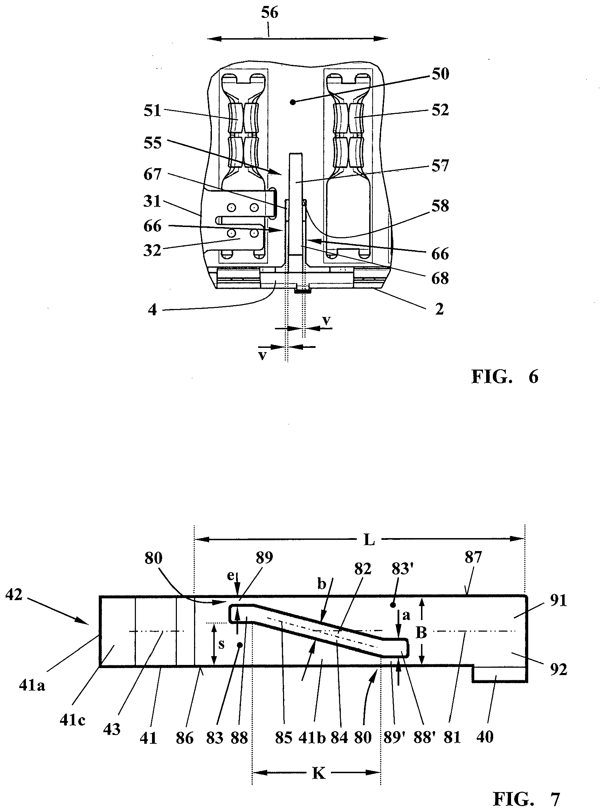

Wie in Fig. 6 dargestellt, ist der Verschiebeweg der Kontaktplatine 50 durch zumindest einen Anschlag 66 begrenzt. Der Anschlag 66 ist zweckmäßig durch eine Rippe 68 des Zellhalters 2 gebildet, die in einen Schlitz 67 der Platine 50 eingreift. Damit ist eine Begrenzung des Verschiebeweges v aus einer Mittellage gemäß Fig. 6 in beiden Verschieberichtungen 56 erzielt. Konstruktiv vorteilhaft ist die Rippe 68 durch einen Fußabschnitt der Halterung 55 ausgeführt, so dass die Halterung 55 nicht nur die Platine 50 verschiebbar hält, sondern auch den Verschiebeweg v der Platine 50 begrenzt. Die Rippe 68 bildet zweckmäßig den Fußabschnitt des Hakens 57, der den Rand 58 der Platine 50 übergreift.

Fig. 7 zeigt in vergrößerter Darstellung das in Fig. 4 dargestellte Kontaktband 41.

Das Kontaktband 41 besteht aus einem Anschlussabschnitt 41 a mit einem Kontaktende 42, über das das Kontaktband 41 mit dem Steckanschluss 54 verbunden ist (Fig. 1).Über den gebogenen Bandabschnitt 41c geht das Kontaktband 41 in den seitlichen Bandabschnitt 41b über, der parallel zu der Seitenfläche 20 des Akkupacks 1 verläuft. Im Ausführungsbeispiel erstreckt sich das Kontaktband 41 mit seinem seitlichen Bandabschnitt 41b längs der Schmalseite 23 des Akkupacks 1 (Fig. 4). Über die Anschlussfahne 40 ist der Bandabschnitt 41b des Kontaktbandes 41 mit dem Zellverbinder 18 elektrisch verbunden. Im Ausführungsbeispiel sind der Zellverbinder 18, die Anschlussfahne 40 und das Kontaktband 41 einteilig ausgebildet.

Wie die Figuren 4 und 7 zeigen, erstreckt sich im Ausführungsbeispiel das Kontaktband 41 von dem am Steckanschluss 45 festgelegten Kontaktende 42 bis zu der mit dem Zellverbinder 18 verbundenen Anschlussfahne 40, wobei - vorzugsweise im Bandabschnitt 41b - im Kontaktband 41 eine Materialschwächung ausgebildet ist, die ein elektrisches Sicherungselement 80 bildet. Diese Materialschwächung im Kontaktband 41 ist in der elektrischen Verbindung zwischen dem Kontaktende 42 und der Anschlussfahne 40 des Kontaktbandes 41 vorgesehen.

Nach einem eigenständigen Erfindungsgedanken ist - wie in den Figuren 4 und 7 dargestellt - im Kontaktband 41 das elektrische Sicherungselement 80 als im Kontaktband 41 integrierte elektrische Überlastsicherung ausgebildet.

Im gezeigten Kontaktband 41 ist zur Materialschwächung eine Ausnehmung 88 vorgesehen, die im Bandabschnitt 41b zwischen dem Anschlussabschnitt 41a und der Anschlussfahne 40 ausgebildet ist. Der Bandabschnitt 41b des Kontaktbandes 41 erstreckt sich längs der Längsachse 43, die im Ausführungsbeispiel nach Fig. 7 eine Längsmittelachse 81 bildet. Die Längsmittelachse 81 teilt den Bandabschnitt 41b des Kontaktbandes 41 in einen oberen Längsabschnitt 91 und einen unteren Längsabschnitt 92. Der obere Längsabschnitt 91 ist durch die Längsmittelachse 81 und einen oberen Längsrand 87 des Kontaktbandes 41 begrenzt; der untere Längsabschnitt 92 ist durch die Längsmittelachse 81 und einen unteren Längsrand 86 des Kontaktbandes 41 begrenzt.

Die Ausnehmung 88 begrenzt mit einem Längsrand 86 bzw. 87 einen Materialsteg 89, der die Materialschwächung des Kontaktbandes 41 bildet.

Die zur Bildung des Materialsteges 89 vorgesehene Ausnehmung 88 ist auf einer Seite der Längsmittelachse 81 des Kontaktbandes vorgesehen; im gezeigten Ausführungsbeispiel begrenzt die Ausnehmung 88 mit dem Längsrand 87 einen ersten Materialsteg 89 in dem oberen Längsabschnitt 91 des Kontaktbandes 41. Auf gleicher Höhe des ersten Materialsteges 89 begrenzt die Ausnehmung 88 auf der anderen Seite der Längsmittelachse 81 mit dem unteren Längsrand 86 einen breiteren Leitungsabschnitt 83 des Kontaktbandes 41. Der Leitungsabschnitt 83 und der Materialsteg 89 liegen zueinander parallel.

Die senkrecht zur Längsachse 43 bzw. orthogonal zur Längsmittelachse 81 gemessene Breite e des Materialsteges 89 ist mehrfach kleiner als die in gleicher Richtung gemessene Breite s des Leitungsabschnitts 83. Insbesondere ist die Breite s des Leitungsabschnitts 83 mehr als drei Mal, insbesondere fünf Mal breiter als der das Sicherungselement 80 bildende Materialsteg 89.

Im gezeigten Ausführungsbeispiel ist im Kontaktband 41, dort im Bandabschnitt 41b, auf beiden Seiten der Längsmittelachse 81 je eine Ausnehmung 88, 88' ausgebildet, so dass auf beiden Seiten der Längsmittelachse 81 jeweils ein Materialsteg 89, 89' als konstruktiv ausgebildetes Sicherungselement gebildet ist. Die Materialstege 89, 89' liegen zueinander elektrisch parallel, d. h., der Materialsteg 89 des Sicherungselementes 80 auf der einen Seite der Längsmittelachse 81 und der Materialsteg 89 des Sicherungselementes 80 auf der anderen Seite der Längsmittelachse 81 des Kontaktbandes 41 liegen zueinander elektrisch parallel. Unabhängig von der Richtung des fließenden Stroms, also sowohl beim Laden als auch beim Entladen, sind die Sicherungselemente wirksam.

Die zur Bildung der Materialstege 89 in das Kontaktband 41 eingebrachten Ausnehmungen 88, 88' sind durch einen Längsschlitz 84 miteinander verbunden. Die Ausnehmungen 88, 88' haben etwa rechteckförmige bis quadratische Gestalt. Eine Ausnehmung 88, 88' hat - unabhängig von ihrer Form - eine senkrecht zur Längsachse 43 bzw. orthogonal zur Längsmittelachse 81 gemessene Breite a, die kleiner ist als die Hälfte der Breite B des Kontaktbandes 41. Der die Ausnehmungen 88, 88' miteinander verbindende Längsschlitz 84 hat eine Schlitzmittelachse 85; orthogonal zur Schlitzmittelachse 85 weist der Längsschlitz 84 eine Breite b auf. In bevorzugter Ausgestaltung des Sicherungselementes 80 ist vorgesehen, dass die Breite b des die Ausnehmungen 88, 88' verbindenden Längsschlitzes 84 gleich der Breite a der Ausnehmungen 88, 88' ist.

Je eine Ausnehmung 88, 88' liegt auf einer Seite der Längsmittelachse 81; in jedem Längsabschnitt 91 bzw. 92 ist somit eine Ausnehmung 88, 88' vorgesehen. Die Ausnehmungen 88, 88' haben in Richtung der Längsachse 43 des Bandabschnittes 41 einen Abstand K voneinander, wobei die Ausnehmung 88' im unteren Längsabschnitt 92 näher an der Anschlussfahne 40 liegt als die Ausnehmung 88 im oberen Längsabschnitt 91. Die Ausnehmung 88 im oberen Längsabschnitt 91 liegt näher an dem Kontaktende 42 als die Ausnehmung 88' im unteren Längsabschnitt 92.

Der die Ausnehmungen 88, 88' verbindende Längsschlitz 84 kreuzt die Längsachse 43 des Kontaktbandes 41. Im gezeigten Ausführungsbeispiel liegt der Längsschlitz 84 mit einer Schlitzmittelachse 85 unter einem Winkel 82 zur Längsachse 43 bzw. zur Längsmittelachse 81. Der Winkel 82 hat eine Größe zwischen 10° und 30°, insbesondere eine Größe von 15°.

In Seitenansicht gemäß Fig. 7 bilden die Ausnehmungen 88, 88' zusammen mit dem Längsschlitz 84 eine etwa Z-förmige Gestalt, wobei die eine Ausnehmung 88' den Fuß eines Z und die andere Ausnehmung 88 das Dach eines Z bilden.

In den Ausführungsbeispielen ist die Halterung 55 einteilig mit dem Zellhalter 2 ausgebildet.

Zweckmäßig übergreift die Halterung 55 einander gegenüberliegende Platinenränder 58, 59 der Kontaktplatine 50. Die Platinenränder 58, 59 erstrecken sich in Verschieberichtung 56 der Kontaktplatine 50.

Vorteilhaft ist der Verschiebeweg der Kontaktplatine 50 durch zumindest einen Anschlag 66 begrenzt. Ein derartiger Anschlag 66 kann durch eine Rippe 68 des Zellhalters 2 gebildet sein.

Die Rippe 68 greift zweckmäßig in einen Schlitz 67 der Kontaktplatine 50 ein. Dadurch ist eine Begrenzung des Verschiebeweges der Kontaktplatine 50 in beiden Verschieberichtungen erzielt.

Konstruktiv vorteilhaft ist die Rippe 68 durch einen Fußabschnitt der Halterung 55 ausgeführt, so dass die Halterung 55 nicht nur die Kontaktplatine 50 verschiebbar hält, sondern auch den Verschiebeweg der Kontaktplatine 50 selbst begrenzt.

## Patentansprüche

1. Akkupack aus zumindest einer in einem Zellhalter (2) gehaltenen Einzelzelle (10), die über einen Zellverbinder (13, 16, 17, 18) auf einer Kontaktseite (19a, 19b) elektrisch kontaktiert ist, und mit einer Kontaktplatine (50), die mehrere Steckanschlüsse (51, 52, 53, 54) zur Verbindung mit einem elektrischen Verbraucher trägt, wobei die Kontaktplatine (50) auf einer Seitenfläche (20) des Zellhalters (2) liegt,
**dadurch gekennzeichnet, dass** auf der Seitenfläche (20) des Zellhalters (2) eine Halterung (55) für die Kontaktplatine (50) vorgesehen ist, in der die Kontaktplatine (50) aufgenommen ist, dass die Kontaktplatine (50) in der Halterung (55) in einer Verschieberichtung (56) verschiebbar gelagert ist, dass die elektrische Verbindung zwischen der Einzelzelle (10) und der Kontaktplatine (50) durch zumindest ein elastisches Kontaktband (31, 41) ausgebildet ist, und das Kontaktband (31, 41) in Verschieberichtung (56) der Kontaktplatine (50) federnd nachgiebig ausgebildet ist.

2. Akkupack nach Anspruch 1,
**dadurch gekennzeichnet, dass** das Kontaktband (31, 41) eine Längsachse (33, 43) aufweist und die Erstreckung des Kontaktbandes (31, 41) in Richtung seiner Längsachse (33, 43) mehrfach größer ist als eine senkrecht zur Längsachse (33, 43) gemessenen Breite (B).

3. Akkupack nach Anspruch 2,
**dadurch gekennzeichnet, dass** das Kontaktband (31, 41) mit seiner Längsachse (33, 43) in einem Anschlussabschnitt (31a, 41a) parallel zur Verschieberichtung (56) der Kontaktplatine (50) ausgerichtet liegt.

4. Akkupack nach Anspruch 3,
**dadurch gekennzeichnet, dass** sich der Anschlussabschnitt (31 a, 41 a) des Kontaktbandes (31, 41) parallel zu einer ersten Seitenfläche (20) des Zellhalters (10) erstreckt.

5. Akkupack nach Anspruch 3 oder 4,
**dadurch gekennzeichnet, dass** der Anschlussabschnitt (31 a, 41 a) mit einem Kontaktende (32) auf der Kontaktplatine (50) mechanisch festgelegt ist.

6. Akkupack nach Anspruch 2,
**dadurch gekennzeichnet, dass** das Kontaktband (31, 41) mit seiner Längsachse (33, 43) in einem seitlichen Bandabschnitt (31b, 41b) senkrecht zur Verschieberichtung (56) der Kontaktplatine (50) ausgerichtet liegt, insbesondere der seitliche Bandabschnitt (31b, 41b) parallel zu einer zweiten Seitenfläche (20) des Zellhalters (2) ausgerichtet liegt.

7. Akkupack nach Anspruch 3 und 6,
**dadurch gekennzeichnet, dass** das Kontaktband (31, 41) mit seiner Längsachse (33, 43) in einem Anschlussabschnitt (31a, 41a) parallel zur Verschieberichtung (56) der Kontaktplatine (50) ausgerichtet liegt, und der Anschlussabschnitt (31a, 41a) und der seitliche Bandabschnitt (31b, 41b) aneinander anschließen, wobei der Anschlussabschnitt (31 a, 41 a) auf einer ersten Seitenfläche (20) des Zellhalters (2) und der seitliche Bandabschnitt (31b, 41b) auf einer zweiten Seitenfläche (20) des Zellhalters (2) liegt, und die zweite Seitenfläche (20) an die erste Seitenfläche (20) anschließt.

8. Akkupack nach Anspruch 7,
**dadurch gekennzeichnet, dass** der seitliche Bandabschnitt (31b, 41b) winklig, insbesondere rechtwinklig zum Anschlussabschnitt (31 a, 41 a) liegt.

9. Akkupack nach einem der Ansprüche 1 bis 8,
**dadurch gekennzeichnet, dass** das Kontaktband (31, 41) ein Kontaktende aufweist, das über eine Anschlussfahne (30, 40) mit einem Zellverbinder (13, 16, 17, 18) elektrisch verbunden ist.

10. Akkupack nach einem der Ansprüche 1 bis 9,
**dadurch gekennzeichnet, dass** der Zellverbinder (13, 16, 17, 18) und das Kontaktband (31, 41) einteilig ausgebildet sind.

11. Akkupack nach Anspruch 1,
**dadurch gekennzeichnet, dass** in Verschieberichtung (56) der Kontaktplatine (50) die Kontaktplatine (50) an gegenüberliegenden Randbereichen mit je einem Kontaktband (31, 41) verbunden ist.

12. Akkupack nach Anspruch 1,
**dadurch gekennzeichnet, dass** die Steckanschlüsse (51, 52, 53, 54) flächige Kontaktzungen aufweisen, die senkrecht zur Verschieberichtung (56) ausgerichtet liegen.

13. Akkupack, insbesondere nach einem der Ansprüche 1 bis 12,
**gekennzeichnet durch** ein Kontaktband (41) mit einem im Kontaktband (41) ausgebildeten, elektrischen Sicherungselement (80) gegen elektrische Überlastung, wobei auf einer Seite einer Längsmittelachse (81) des Kontaktbandes (41) ein erstes elektrisches Sicherungselement (80) und auf der anderen Seite der Längsmittelachse (81) des Kontaktbandes (41) ein zweites elektrisches Sicherungselement (80) ausgebildet ist.

14. Akkupack nach Anspruch 13,
**dadurch gekennzeichnet, dass** das Kontaktband (41) zwischen dem Kontaktende (42) und der Anschlussfahne (40) eine Ausnehmung (88) aufweist, und die Ausnehmung (88) mit einem Längsrand (86, 87) des Kontaktbandes (41) einen Materialsteg (89) begrenzt, der die Materialschwächung des Kontaktbandes (41) bildet, wobei im Kontaktband (41) auf beiden Seiten einer Längsmittelachs (81) je eine Ausnehmung (88) ausgebildet ist, und die Ausnehmungen (88) durch einen Längsschlitz (84) miteinander verbunden sind.

15. Akkupack nach Anspruch 14,
**dadurch gekennzeichnet, dass** die Ausnehmung (88) im Kontaktband (41) auf einer Seite einer Längsmittelachse (81) des Kontaktbandes (41) mit dem einen Längsrand (87) den Materialsteg (89) begrenzt und auf der anderen Seite der Längsmittelachse (81) mit dem anderen Längsrand (86) einen Leitungsabschnitt (83) des Kontaktbandes (41) begrenzt.

## Claims

1. Battery pack composed of at least one single cell (10), held in a cell holder (2), which is electrically contacted via a cell connector (13, 16, 17, 18) on a contact side (19a, 19b), and having a contact plate (50) that carries a plurality of plug-type connections (51, 52, 53, 54) for connection to an electrical load, wherein the contact plate (50) lies on a side face (20) of the cell holder (2), **characterised in that**, on the side face (20) of the cell holder (2), a holding element (55) for the contact plate (50) is provided, in which the contact plate (50) is received, the contact plate (50) is displaceably mounted in a displacement direction (56) in the holding element (55), the electrical connection between the individual cell (10) and the contact plate (50) is formed by at least one elastic contact strip (31, 41), and the contact strip (31, 41) is resiliently formed in the displacement direction (56) of the contact plate (50).

2. Battery pack according to claim 1,
**characterised in that** the contact strip (31, 41) has a longitudinal axis (33, 43) and the extension of the contact strip (31, 41) in the direction of its longitudinal axis (33, 43) is many times greater than a width (B) measured perpendicularly to the longitudinal axis (33, 43).

3. Battery pack according to claim 2,
**characterised in that** the contact strip (31, 41) lies, with its longitudinal axis (33, 43), in a terminal portion (31a, 41a) orientated parallel to the displacement direction (56) of the contact plate (50).

4. Battery pack according to claim 3,
**characterised in that** the terminal portion (31a, 41a) of the contact strip (31, 42) extends parallel to a first side face (20) of the cell holder (10).

5. Battery pack according to claim 3 or 4,
**characterised in that** the terminal portion (31a, 41a) is mechanically fixed with a contact end (32) on the contact plate (50).

6. Battery pack according to claim 2,
**characterised in that** the contact strip (31, 41) lies, with its longitudinal axis (33, 43), in a lateral strip portion (31b, 41b) orientated perpendicularly to the displacement direction (56) of the contact plate (50), in particular the lateral strip portion (31b, 41b) lies orientated parallel to a second side face (20) of the cell holder (2).

7. Battery pack according to claim 3 and 6,
**characterised in that** the contact strip (31, 41) lies, with its longitudinal axis (33, 43), in a terminal portion (31a, 41a) orientated parallel to the displacement direction (56) of the contact plate (50), and the terminal portion (31a, 41a) and the lateral strip portion (31b, 41b) are connected to each other, wherein the terminal portion (31a, 41a) lies on a first side face (20) of the cell holder (2) and the lateral strip portion (31b, 41b) lies on a second side face (20) of the cell holder (2), and the second side face (20) is connected to the first side face (20).

8. Battery pack according to claim 7,
**characterised in that** the lateral strip portion (31b, 41b) lies at an angle, in particular at right angles, to the terminal portion (31a, 41a).

9. Battery pack according to one of claims 1 to 8,
**characterised in that** the contact strip (31, 41) has a contact end, which is electrically connected via a terminal lug (30, 40) to a cell connector (13, 16, 17, 18).

10. Battery pack according to one of claims 1 to 9,
**characterised in that** the cell connector (13, 16, 17, 18) and the contact strip (31, 41) are formed integrally in one part.

11. Battery pack according to claim 1,
**characterised in that**, in the displacement direction (56) of the contact plate (50), the contact plate (50) is connected at opposite edge regions to a respective contact strip (31, 41).

12. Battery pack according to claim 1,
**characterised in that** the plug-type connections (51, 52, 53, 54) have flat contact tongue elements, which lie orientated perpendicularly to the displacement direction (56).

13. Battery pack, in particular according to one of claims 1 to 12, **characterised by** a contact strip (41) having a fuse (80), protecting against overload, formed in the contact strip (41), wherein on one side of a central longitudinal axis (81) of the contact strip (41) a first fuse (80) is formed and on the other side of the central longitudinal axis (81) of the contact strip (41) a second fuse (80) is formed.

14. Battery pack according to claim 13,
**characterised in that** the contact strip (41) has a recess (88) between the contact end (42) and the terminal lug (40), and the recess (88) defines, with a longitudinal edge (86, 87) of the contact strip (41), a material web (89), which forms the material weakening of the contact strip (41), wherein a respective recess (88) is formed in the contact strip (41) on both sides of a central longitudinal axis (81), and the recesses (88) are connected to each other by a longitudinal slot (84).

15. Battery pack according to claim 14,
**characterised in that** the recess (88) in the contact strip (41) defines on one side of a central longitudinal axis (81) of the contact strip (41), with one longitudinal edge (87), the material web (89), and defines on the other side of the central longitudinal axis (81), with the other longitudinal edge (86), a line portion (83) of the contact strip (41).

## Revendications

1. Batterie composée d'au moins un élément individuel (10), retenu dans un porte-élément (2), qui est raccordé électriquement par l'intermédiaire d'un connecteur d'élément (13, 16, 17, 18) sur un côté contact (19a, 19b), et avec une plaque de contact (50) qui porte plusieurs fiches (51, 52, 53, 54) pour la liaison avec un consommateur électrique, la plaque de contact (50) se trouvant sur une surface latérale (20) du porte-élément (2),
**caractérisée en ce qu'**il est prévu sur la surface latérale (20) du porte-élément (2) une fixation (55) pour la plaque de contact (50), dans laquelle ladite plaque de contact (50) est logée, **en ce que** la plaque de contact (50) est montée dans la fixation (55) en étant mobile dans un sens de déplacement (56), **en ce que** la liaison électrique entre l'élément individuel (10) et la plaque de contact (50) est formée par au moins une bande de contact élastique (31, 41), et la bande de contact (31, 41) présente une souplesse élastique par ressort dans le sens de déplacement (56) de la plaque de contact (50).

2. Batterie selon la revendication 1,
**caractérisée en ce que** la bande de contact (31, 41) présente un axe longitudinal (33, 43), et l'extension de la bande de contact (31, 41) dans le sens de son axe longitudinal (33, 43) est plusieurs fois supérieure à une largeur (B) mesurée perpendiculairement à l'axe longitudinal (33, 43).

3. Batterie selon la revendication 2,
**caractérisée en ce que** la bande de contact (31, 41) avec son axe longitudinal (33, 43) est orientée dans une section de raccordement (31a, 41a) parallèlement au sens de déplacement (56) de la plaque de contact (50).

4. Batterie selon la revendication 3,
**caractérisée en ce que** la section de raccordement (31a, 41a) de la bande de contact (31, 41) s'étend parallèlement à une première surface latérale (20) du porte-élément (10).

5. Batterie selon la revendication 3 ou 4,
**caractérisée en ce que** la section de raccordement (31a, 41a) est immobilisée mécaniquement avec une extrémité de contact (32) sur la plaque de contact (50).

6. Batterie selon la revendication 2,
**caractérisée en ce que** la bande de contact (31, 41) avec son axe longitudinal (33, 43) est orientée dans une section de bande latérale (31b, 41b) perpendiculairement au sens de déplacement (56) de la plaque de contact (50), en particulier la section de bande latérale (31b, 41b) est orientée parallèlement à une seconde surface latérale (20) du porte-élément (2).

7. Batterie selon les revendications 3 et 6,
**caractérisée en ce que** la bande de contact (31, 41) avec son axe longitudinal (33, 43) est orientée dans une section de raccordement (31a, 41a) parallèlement au sens de déplacement (56) de la plaque de contact (50), et la section de raccordement (31a, 41a) et la bande de raccordement latérale (31b, 41b) se font suite, la section de raccordement (31a, 41a) se trouvant sur une première surface latérale (20) du porte-élément (2) et la section de bande latérale (31b, 41b) sur une seconde surface latérale (20) du porte-élément (2), et la seconde surface latérale (20) faisant suite à la première surface latérale (20).

8. Batterie selon la revendication 7,
**caractérisée en ce que** la section de bande latérale (31b, 41b) définit un angle, en particulier un angle droit, avec la section de raccordement (31a, 41a).

9. Batterie selon l'une des revendications 1 à 8,
**caractérisée en ce que** la bande de contact (31, 41) présente une extrémité de contact qui est reliée électriquement à un connecteur d'élément (13, 16, 17, 18) par l'intermédiaire d'une patte de raccordement (30, 40).

10. Batterie selon l'une des revendications 1 à 9,
**caractérisée en ce que** le connecteur d'élément (13, 16, 17, 18) et la bande de contact (31, 41) sont conçus d'une seule pièce.

11. Batterie selon la revendication 1,
**caractérisée en ce que** la plaque de contact (50), dans son sens de déplacement (56), est reliée, à chacune de ses zones de bord opposées, à une bande de contact (31, 41).

12. Batterie selon la revendication 1,
**caractérisée en ce que** les fiches (51, 52, 53, 54) présentent des languettes de contact planes qui sont orientées perpendiculairement au sens de déplacement (56).

13. Batterie en particulier selon l'une des revendications 1 à 12,
**caractérisée par** une bande de contact (41) avec un élément de protection électrique (80) contre une surcharge électrique, formé dans ladite bande de contact (41), un premier élément de protection électrique (80) étant formé d'un côté d'un axe longitudinal médian (81) de la bande (41), et un second élément de protection électrique (80) de l'autre côté de l'axe longitudinal médian (81) de la bande de contact (41).

14. Batterie selon la revendication 13,
**caractérisée en ce que** la bande de contact (41) présente entre l'extrémité de contact (42) et la patte de raccordement (40) un évidement (88), et l'évidement (88) délimite avec un bord longitudinal (86, 87) de la bande de contact (41) une barrette de matériau (89) qui forme l'affaiblissement de la bande de contact (41), un évidement (88) étant formé dans la bande de contact (41) de chaque côté d'un axe longitudinal médian (81), et les évidements (88) étant reliés entre eux par une fente longitudinale (84).

15. Batterie selon la revendication 14,
**caractérisée en ce que** l'évidement (88) de la bande de contact (41) délimite d'un côté de l'axe longitudinal médian (81) de la bande de contact (41), avec un bord longitudinal médian (87), la barrette de matériau (89), et délimite de l'autre côté de l'axe longitudinal médian (81), avec l'autre bord longitudinal (86), une section conductrice (83) de la bande de contact (41).
